# EUROPÄISCHE PATENTSCHRIFT

(11) **EP 3 143 313 B1**
(45) Veröffentlichungstag und Bekanntmachung des Hinweises auf die Patenterteilung: **12.09.2018**
(21) Anmeldenummer: 15725537.3
(22) Anmeldetag: 13.05.2015
(51) Int. Cl.: F16K 3/02, F16K 3/316, F16K 27/04

(54) **PLATTENSCHIEBER-KONSTRUKTION ZUR ABSPERRUNG VON PUMPFÄHIGEN FLUIDEN, VERFAHREN ZUM ABSCHLIESSEN EINES ROHRES UND VERWENDUNG EINER PLATTENSCHIEBER-KONSTRUKTION**
PARALLEL SLIDE GATE VALVE CONSTRUCTION FOR BLOCKING PUMPABLE FLUIDS, METHOD FOR CLOSING OFF A PIPE, AND USE OF A PARALLEL SLIDE GATE VALVE CONSTRUCTION
CONSTRUCTION DE ROBINET-VANNE POUR BLOQUER DES FLUIDES POMPABLES, PROCÉDÉ DE FERMETURE D'UN TUYAU ET UTILISATION D'UNE CONSTRUCTION DE ROBINET-VANNE

(30) Priorität: 15.05.2014 CH 742142014
(43) Veröffentlichungstag der Anmeldung: 22.03.2017
(73) Patentinhaber: Veritec AG, 9242 Oberuzwil (CH)
(72) Erfinder: GSPONER, Patrik Daniel, CH-9242 Oberuzwil (CH); SCHMIDT, Daniel, CH-9242 Oberuzwil (CH); GSPONER, Arnold, CH-9242 Oberuzwil (CH)
(74) Vertreter: Hepp Wenger Ryffel AG
(86) Internationale Anmeldenummer: PCT/EP2015/060632
(87) Internationale Veröffentlichungsnummer: WO 2015/173320

(56) Entgegenhaltungen:
- DE-U1- 29 611 546

## Beschreibung

Die vorliegende Erfindung betrifft eine Plattenschieber-Konstruktion zur Absperrung von pumpfähigen Flüssigkeiten und Gasen, ein Verfahren zum Abschliessen eines Rohres sowie eine Verwendung einer Plattenschieber Konstruktion gemäss den Oberbegriffen der unabhängigen Ansprüche.

Aus dem Stand der Technik ist eine Vielzahl von unterschiedlichen Plattenschiebern für den Einsatz als Ventil beim Transport von Flüssigkeiten oder Gasen bekannt. DE 296 11 546 U1 offenbart ein Schieberorgan zum Einbau in Rohrleitungen für flüssige und gasförmige Medien sowie für fließfähige granulöse und pulverförmige Stoffe. Üblicherweise werden Plattenschieber in Rohren eingesetzt, um den Fluss einer Flüssigkeit in einem Rohr zu unterbrechen. Der Plattenschieber wird dabei als ein kurzes Teilstück des Rohres eingebaut. Die Ventilfunktion von Plattenschiebern wird erreicht, indem eine Schieberplatte in den Rohrquerschnitt geschoben wird. Diese Schieberplatte unterbricht den Fluss im Rohr, da sie den gesamten Rohrquerschnitt abdeckt. Plattenschieber beinhalten in der Regel zwei Dichtfunktionen. Die erste ist ihre primäre Ventilfunktion durch die das Rohr verschlossen wird. Die zweite Dichtfunktion ist erforderlich um die Schieberplatte in den Rohrquerschnitt zu bewegen. Um zu verhindern, dass die unter Druck stehende Flüssigkeit des Rohres austritt, muss die Schieberplatte mit einer Dichtung gegenüber der Umgebung abgedichtet werden. Dabei wird die Schieberplatte entweder über eine Dichtung in den Rohrquerschnitt eingeführt oder die Schieberplatte befindet sich in einem geschlossenen Gehäuse.

Durch die Bewegung der Schieberplatte treten Verschleiss an der Schieberplatte, einer Führung der Schieberplatte und den Dichtungen auf. Eine hohe Anzahl von Öffnungs- und Schliessvorgängen mit der Schieberplatte verursacht einen hohen Wartungsaufwand, da insbesondere Dichtungen und Führungen ausgewechselt werden müssen. Insbesondere bei der Zufuhr von Rohmaterialien in Biogasanlagen kommt es beim Versagen der Dichtungen zu unangenehmen Verschmutzungen der technischen Anlagen und zu Geruchs-bildungen.

Die US 5,295,661 beschreibt ein Messerventil zum Abschliessen von Rohren. Ein Gehäuse umschliesst ein Messer vollständig. Wenn der Fluss durch das Rohr unterbrochen werden soll, wird das Messer in das Rohr gefahren um das Rohr zu blockieren. Soll das Rohr wieder freigegeben werden, wird das Messer zurück in das Gehäuse gefahren. Das Messer wird durch ein Handrad bedient und zwischen einer Öffnungs- und einer Schliessstellung verfahren. Zwischen einer Welle des Handrades und dem Gehäuse ist eine Dichtung eingebaut, die verhindert, dass eine Transportflüssigkeit an der Welle aus dem Gehäuse austritt. Der Raum im Gehäuse ist von einer ersten Seite des Messers befüllbar. In der Konstruktion nach US 5,295,661 wird eine zweite Seite des Messers von der anderen Seite des Messers abgedichtet, damit das Messer den Fluss im Rohr vollständig unterbricht. Dies wird durch einen Dichtungsring zwischen dem Messer und einer Auflagefläche des Gehäuses realisiert. Da der Dichtungsring am Messer anliegt verschleisst dieser insbesondere bei einer hohen Anzahl an Öffnungs- und Schliessvorgängen und muss häufig und aufwendig ausgetauscht werden.

Es ist daher die Aufgabe der Erfindung, die Nachteile des Standes der Technik zu überwinden. Insbesondere soll ein Plattenschieber zur Verfügung gestellt werden, der mit geringem Verschleiss eine hohe Anzahl an Öffnungs- und Schliesszyklen durchführen kann. Weiterhin sollen alle Teile, die Verschleiss ausgesetzt sind einfach austauschbar sein.

Diese Aufgabe wird durch die in den unabhängigen Patentansprüchen definierte Vorrichtung, Verfahren und Verwendung gelöst. Weitere Ausführungsformen ergeben sich aus den abhängigen Patentansprüchen.

Im Nachfolgenden orientieren sich die Begriffe "vorne" und "hinten" entlang der Achse der Kolbenstange. Von der Schieberplatte aus gesehen ist in diesem Zusammenhang "vorne" in Richtung des zu verschliessenden Rohres und "hinten" in Richtung eines Gehäusedeckels.

Ein Aspekt der vorliegenden Erfindung betrifft eine Plattenschieber-Konstruktion mit einem Gehäuse. Das Gehäuse beinhaltet ein Deckelteil zum Verschliessen des Gehäuses. Weiter beinhaltet das Gehäuse eine im Gehäuse bewegbare Schieberplatte und eine durch eine Deckelteilöffnung hindurch bewegbare Kolbenstange. Die Schieberplatte und die Kolbenstangenverlängerung sind miteinander verbunden oder verbindbar. Die Kolbenstangenverlängerung wird durch eine Deckelteildichtung geführt.

Die Schieberplatte kann eine Öffnungsstellung, während der die Schieberplatte von einem hinteren Gehäuseteil aufgenommen wird, einnehmen. Weiter kann die Schieberplatte eine Schliessstellung, während der die Schiebeplatte in einem vorderen Gehäuseteil eine Rohröffnung verschliesst, einnehmen. In der Schliessstellung ist der hintere Gehäuseteil von beiden Seiten der Schieberplatte befüllbar.

Die Seiten der Schieberplatte werden durch die Oberflächen, die flussauf- bzw. flussabwärts zeigen definiert.

Das Deckelteil kann sowohl ein separates Teil sein als auch durch andere Gehäuseteile gebildet werden und daher einteilig mit anderen Gehäuseteilen ausgebildet sein. Die Deckelteildichtung befindet sich am Deckelteil und verhindert einen Fluss des im Rohr zu transportierenden Fluides durch die Deckelteilöffnung in die Umgebung des Rohres.

Da der hintere Gehäuseteil von beiden Seiten befüllbar ist, kann ein kleiner Leckstrom zwischen den Seiten der Schieberplatte entstehen. In der erfindungsgemässen Plattenschieber-Konstruktion wird der Leckstrom zugelassen, um auf eine Dichtung zwischen vorderen und hinteren Gehäuseteil verzichten zu können. Der Verzicht auf diese Dichtung verhindert ein Verschleissen und ermöglicht somit längere Standzeiten sowie einen wesentlich geringeren Wartungsaufwand für die Plattenschieber-Konstruktion. Zusätzlich übernimmt das Fluid zwischen Gehäuse und Schieberplatte die Funktion eines Gleit- und oder Spülmittels und reduziert den Verschleiss weiter. Dadurch kann mit der Schieberplatte eine hohe Anzahl von Schliesszyklen durchgeführt werden, ohne dass Verschleiss auftritt.

Vorzugsweise ist im Gehäuse wenigstens eine, vorzugsweise zwei, verschließbare Reinigungsöffnung zum Spülen oder Reinigen des hinteren Gehäuseteils ausgebildet. Die Reinigungsöffnungen befinden sich vorzugsweise im Deckelteil. Durch die Reinigungsöffnung kann schnell und einfach ein Reinigungsmittel oder Reinigungsmedium eingeführt werden um Verstopfungen des hinteren Gehäuseteils zu beseitigen.

Gerade biologische Fluide, welche durch Rohre transportiert werden, weisen oft Feststoffteile auf. Diese Feststoffteile können vor allem im hinteren Gehäuseteil zu Verstopfungen führen, was ein vollständiges Öffnen bis an den Deckelteil und somit ein Zerschneiden oder Zerkleinern dieser Feststoffanteile behindern könnte. Ein Endlagenanzeiger ,insbesondere ein berührungsloser Endlagenanzeiger, könnte nicht ansprechen und der verbleibende Hubraum würde zunehmend mit Feststoff gefüllt, wodurch eine sichere Funktion des Plattenschieber nicht mehr gewährleistet wäre.

Mit Hilfe der Reinigungsöffnungen ist der Plattenschieber bei Verstopfungen des hinteren Gehäuseteils schnell wieder einsatzbereit. Die Feststoffteile können mit Hilfe des Reinigungsmittels oder -mediums aus dem hinteren Gehäuseteil ausgespült bzw. mittels Reinigungswerkzeug ausgeführt werden.

Die Reinigungsöffnung oder Reinigungsöffnungen ist/sind vorzugsweise mit einem Innengewinde versehen und verschliessbar z.B. mit je einem einschraubbaren Verschlusszapfen aus Metall oder Kunststoff. Alternativ ist vorzugsweise an Stelle eines einschraubbaren Verschluss-Zapfens ein einschraubbares T- oder Y-Rohrstück aus Metall oder Kunststoff verwendbar. Alternativ ist zusätzlich mindestens eine weitere Reinigungsöffnung an einer anderen Stelle als am Deckelteil am Gehäuse angebracht. In einer weiteren Alternative ist/sind Reiningungsöffnung/en aussschliesslich an anderen Stellen als am Deckelteil, insbesondere am Gehäuse, angebracht.

Das Verschliessen der Reinigungsöffnung verhindert einen Austritt des Fluides in die Umgebung, wenn die Reinigungsöffnungen nicht in Gebrauch sind.

Vorzugsweise sind die verschließbaren Reinigungsöffnungen derart ausgestaltet, dass mechanische Reinigungsmittel sich durch die Reinigungsöffnungen einführen lassen und der hintere Gehäuseraum gereinigt werden kann. Weiterhin sind die Reinigungsöffnungen derart ausgestaltet, dass sie sich an eine Zufuhr für Reinigungsmedien anschliessen lassen und somit Reinigungsmedien, insbesondere Druckgas, z.B. Stickstoff, oder Druckwasser, in den hinteren Gehäuseteil hineinströmen können. Bei einer Reinigung des hinteren Gehäuseteils mit mechanischen Reinigungsmitteln eignen sich insbesondere Eisenstangen mit maximal einem Durchmesser der Dicke der Schieberplatte oder ähnliches Werkzeug. Feststoffteile, die sich im hinteren Gehäuseteil gesammelt haben, werden bei der Reinigung durch die Reinigungsöffnung entnommen oder im hinteren Gehäuseteil manuell zerkleinert oder aus dem hinteren Gehäuseteil gedrückt. Durch die Reinigungsmedien und die mechanischen Reinigungsmittel lässt sich der hintere Gehäuseteil leicht von Verstopfungen befreien, ohne dass die Plattenschieber-Konstruktion auseinandergenommen werden müsste.

Besonders vorteilhaft ist die Reinigung durch einem T- oder Y-Rohrstück. Durch ein solches Rohrstück lässt sich der hintere Gehäuseteil gleichzeitig mit Druckgas oder Druckwasser und einem mechanischen Reinigungsmittel reinigen.

Vorzugsweise sind Gehäuseführungen für die Schieberplatte an Seitenwänden des Gehäuses mit vorzugsweise lösbaren Verbindungen, insbesondere Schrauben angebracht. Durch die lösbaren Verbindungen sind die Gehäuseführungen leicht montier- und austauschbar.

Die Schieberplatte ist bevorzugt zu den Seitenwänden des Gehäuses und/oder den Gehäuseführungen beabstandet angeordnet.

Durch die Beabstandung wird Reibung und damit Verschleiss zwischen der Schieberplatte und den Gehäuseführungen vermieden, da diese sich nicht berühren. Weiter wird durch die Beabstandung Reibung und Verschleiss zwischen der Schieberplatte und den Seitenwänden des Gehäuses vermieden.

Vorzugsweise laufen eine vordere und/oder eine hintere Kante der Schieberplatte keilförmig zu, sodass sie Messer bilden. Durch die keilförmige Form der Kanten sind die Kanten scharf ausgebildet und erleichtern ein Zerkleinern von Feststoffteilen. Solche Feststoffteile können ein vollständiges Erreichen der Schliessstellung oder der Öffnungsstellung behindern. Solche Feststoffteile werden durch die Kanten zerkleinert, wodurch die Schieberplatte die Schliess- bzw. Öffnungsstellung vollständig erreichen kann. Weiter werden die Feststoffteile im hinteren Gehäuseteil durch die hintere Kante zerkleinert. Zerkleinerte Feststoffteile sind einfacher vom hinteren Gehäuseteil zu entfernen und tendieren weniger zu Verstopfung des hinteren Gehäuseteiles.

Vorzugsweise ist eine Gegenschneide für die vordere Kante und/oder eine Gegenschneide für die hintere Kante der Schieberplatte im Gehäuse angeordnet. Durch die Gegenschneiden werden die Feststoffteile im Fluid mit Scherkräften getrennt. Dies ist insbesondere bei biologischen Feststoffteilen wie Zweigen, welche grössere Kräfte zur Zerkleinerung benötigen, vorteilhaft. Die vordere Gegenschneide kann von einem Dichtflansch, der Rohr und Plattenschieber-Konstruktion gegen eine Umgebung abdichtet, ausgebildet werden. Alternativ kann die vordere Gegenschneide einstückig mit dem Gehäuse ausgebildet sein oder in eine Nut eingesetzt werden. Die hintere Gegenschneide ist vorzugsweise mit Verbindungsmitteln am Gehäuse montiert. Alternativ ist die hintere Gegenschneide einstückig mit dem Gehäuse ausgebildet.

Die Kolbenstangenverlängerung ist vorzugsweise mit einer Hydraulikkolbenstange verbunden oder verbindbar. Insbesondere kann die Kolbenstangenverlängerung einstückig mit der Hydraulikkolbenstange ausgebildet sein. Falls Kolbenstangenverlängerung und Hydraulikkolbenstange zwei- oder mehrstückig ausgebildet sind, sind die Teile formschlüssig, vorzugsweise über ein Gewinde, verbunden.
Eine Hydraulik eignet sich besonders für Plattenschieber, welche mit einer höheren Frequenz zwischen Schliess- und Öffnungsstellungen bewegt werden müssen, da die Bewegung automatisiert und kontrolliert werden kann. Alternativ können beispielsweise Pneumatikzylinder, elektrische Motoren, Spindelmotoren, Servomotoren oder ein Handrad verwendet werden.

Bevorzugt wird eine Dichtung der Hydraulikkolbenstange als Deckelteildichtung eingesetzt. Dadurch können die Aufgaben von Deckelteildichtung und Hydraulikdichtung von einer einzigen Dichtung übernommen werden. Es wird dadurch zum einen der Eintritt von Hydrauliköl in das zu transportierende Fluid verhindert, zum anderen wird der Austritt von Fluid in die Umgebung verhindert. Durch die Verwendung einer einzigen Dichtung sind weniger Teile nötig, wodurch Kosten gespart werden können. Zudem wird die Konstruktion einfach gehalten.

Die Deckelteildichtung ist bevorzugt eine herkömmliche Pneumatik- oder Hydraulikdichtung wie z.B. eine mehrfache Ringdichtung im Sinne einer Labyrinthdichtung. Auch Stopfbuchsendichtungen wären denkbar. Alternativ können z.B. Dichtungen mit wenigstens einem O-Ring oder eine Stangendichtung verwendet werden.

Die Schieberplatte wird vorzugsweise aus Stahl gefertigt. Insbesondere Edelstähle eignen sich aufgrund ihrer hohen Festigkeit und Korrosionsbeständigkeit als Schieberplattenmaterial. Dadurch wird die Lebenszeit der Schieberplatte verlängert. Alternativ sind Schieberplatten aus anderen Materialien als Stahl verwendbar. So können beispielsweise andere Metalle oder beispielsweise Kunststoffe verwendet werden.

Ein weiterer Aspekt der vorliegenden Erfindung betrifft ein Verfahren zum Abschliessen eines Rohres mittels einer Plattenschieber-Konstruktion. Das Gehäuse beinhaltet einen Deckelteil zum Verschliessen des Gehäuses. Weiter beinhaltet das Gehäuse eine im Gehäuse bewegbare Schieberplatte und eine durch eine Deckelteilöffnung hindurch bewegbare Kolbenstangenverlängerung. Die Schieberplatte und die Kolbenstangenverlängerung sind miteinander verbunden oder verbindbar. Die Kolbenstangenverlängerung wird durch eine Deckelteildichtung geführt. In dem Verfahren wird die Schieberplatte in der Öffnungsstellung von einem hinteren Gehäuseteil aufgenommen. Die Schieberplatte wird von der Kolbenstangenverlängerung aus der Öffnungsstellung in eine Schliessstellung bewegt. In der Schliessstellung strömt Fluid von Seiten der Schieberplatte jeweils ein oder aus.

Die Seiten der Schieberplatte werden durch Oberflächen, die flussauf- bzw. flussabwärts zeigen, definiert. Dabei kann das Deckelteil sowohl als ein separates Teil ausgebildet sein als auch durch andere Gehäuseteile, daher einstückig mit anderen Gehäuseteilen, ausgebildet sein. Die Deckelteildichtung befindet sich am Deckelteil und verhindert einen Fluss von im Rohr zu transportieren dem Fluid durch die Deckelteilöffnung in die Umgebung des Rohres.

In der Schliessstellung kann das Fluid, von einer flussaufwärtsliegenden Seite der Schieberplatte in den hinteren Gehäuseteil fliessen. Auf der flussabwärts liegenden Seite kann das Fluid aus dem hinteren Gehäuseteil wieder heraus und zurück ins Rohr fliessen.

Vorzugsweise wird die Schieberplatte in dem Verfahren zum Abschliessen eines Rohres durch eine Hydraulikkolbenstange bewegt
Vorzugsweise führt eine Hydraulikdichtung, die als Deckelteildichtung eingesetzt wird, die Kolbenstangenverlängerung.

Die Schieberplatte bewegt sich vorzugsweise in einem Zyklus von 3-30 Minuten, insbesondere in einem Zyklus von 15-25 Minuten, von der Öffnungsstellung in die Schliessstellung. Der Plattenschieber eignet sich daher für Anwendungen, die ein häufiges Öffnen und Schliessen erfordern, insbesondere in Biogasanlagen oder Kolbenpumpen allgemein. Bei solch häufigen Schliessen tritt ein Verschleiss schneller auf. Da die erfindungsgemässe Plattenschieber-Konstruktion durch eine Vermeidung von Dichtungen im hinteren Gehäuseteil verschleissarm ausgebildet ist, eignet sich die erfindungsgemässe Plattenschieber-Konstruktion besonders für Verfahren mit solch häufigen Schliesszyklen.

Der Betrieb der Plattenschieber-Konstruktion 1 ist besonders verschleissarm. In der Folge kann die Plattenschieber-Konstruktion 1 häufig über Jahre im 24 Stundenbetrieb wartungsfrei eingesetzt werden.

Bevorzugt wird die Plattenschieber-Konstruktion dazu verwendet Rohre, welche pastöse Flüssigkeiten mit Feststoffteilen, insbesondere biologische Flüssigkeiten mit Feststoffteilen transportieren, abzuschliessen. Die Plattenschieber-Konstruktion eignet sich besonders für Rohre mit einem Nenndurchmesser von 30-3000 mm und einem Nenndruck von bis zu 25 bar, insbesondere Nenndurchmesser von 50-1000 mm und Nenndrücke von 6-16 bar.

Anhand von Figuren, welche lediglich Ausführungsbeispiele darstellen, wird die Erfindung im Folgenden näher erläutert. Es zeigen schematisch:
- Figur 1:: Eine perspektivische Darstellung einer erfindungsgemässen Plattenschieber-Konstruktion,
- Figur 2:: die Plattenschieber-Konstruktion aus Figur 1 in einer Seitenansicht, teilweise geöffnet,
- Figur 3:: die Plattenschieber-Konstruktion aus Figur 1 in einer weiteren Seitenansicht,
- Figur 4:: einen Querschnitt der Plattenschieber-Konstruktion aus Figur 1,
- Figur 5a:: eine Detailansicht der Plattenschieber-Konstruktion aus Figur 1 (Detail C),
- Figur 5b:: eine Detailansicht der Plattenschieber-Konstruktion aus Figur 1 (Detail D),
- Figur 5c:: eine Detailansicht der Plattenschieber-Konstruktion aus Figur 1 (Detail E),
- Figur 6:: einen Querschnitt der Plattenschieber-Konstruktion aus Figur 1,
- Figur 7a:: eine Detailansicht der Schieberplatte aus Figur 1,
- Figur 7b:: eine Detailansicht des Verbindungsteiles auf Figur 1,
- Figur 8:: eine Detailansicht der Schieberplatte mit Verbindungsteil.

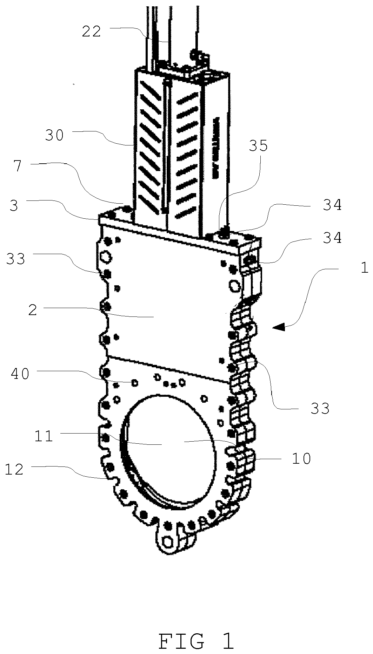

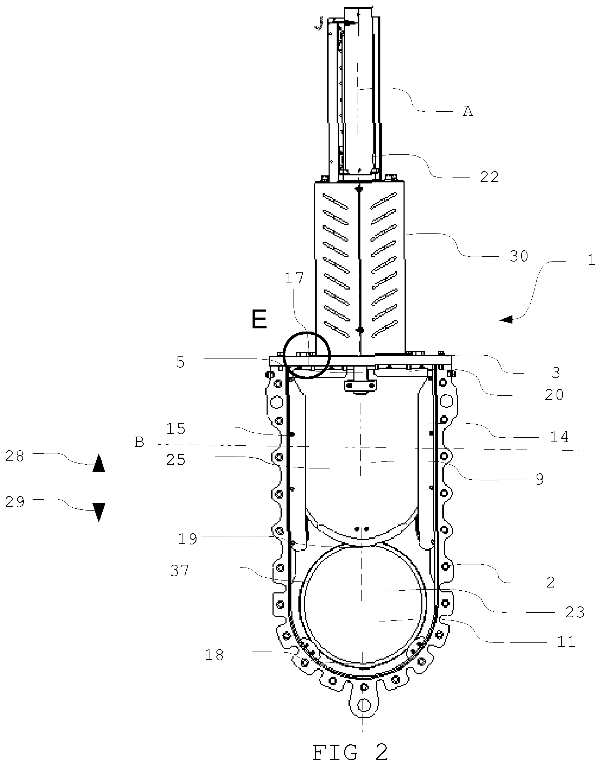

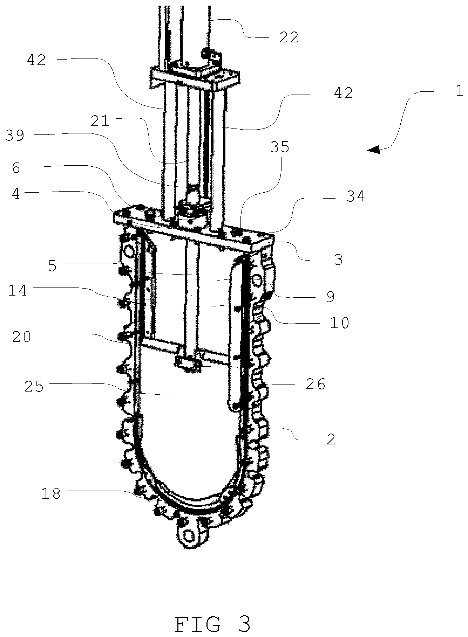

Figur 1 ist eine perspektivische Darstellung einer erfindungsgemässen Plattenschieber-Konstruktion 1. Die Plattenschieber-Konstruktion 1 besteht im Wesentlichen aus einem Gehäuse 2, das von einem Deckelteil 3 abgeschlossen wird. An dem Deckelteil 3 ist eine Handschutzabdeckung 30 mit als Schrauben ausgebildeten Verbindungsmitteln montiert. Inseitig dieser Handschutzabdeckung 30 sind auf beiden Seiten der Hydraulikolbenstange je eine Stütze 42 mittels Schraubverbindungen auf den Deckelteil 3 angebracht (siehe Fig. 3). Diese vorzugsweise runden Stützen dienen der Kraftübertragung von der im Hydraulikzylinderkolben 22 erzeugten Schliess- und Öffnungskraft auf eine Schieberplatte 25. Oberhalb der Handschutzabdeckung 30 ist ein Hydraulikzylinderkolben 22 auf diesen Stützen 42 montiert. Das Gehäuse 2 beinhaltet zwei Hälften, welche mit Schrauben 33 miteinander verbunden sind. Das Deckelteil 3 sowie unmittelbar darunter im Gehäuse 2 ist mit Schrauben 7 am Gehäuse 2 montiert. Im Deckelteil 3 befinden sich mehrere Reinigungsöffnungen 34, welche mit Verschlusszapfen 35 verschlossen sind. Durch die Reinigungsöffnungen 34 kann ein hinterer Gehäuseteil 9 (nicht gezeigt, siehe beispielsweise Fig. 2) mit Reinigungsmitteln oder Reinigungsmedien gereinigt werden.

Die Plattenschieber-Konstruktion 1 verfügt über eine Rohröffnung 11, durch welche das Fluid in einer offenen Stellung der Plattenschieber-Konstruktion fliessen kann. Einkerbungen 12 und Bohrungen 40 sind um die Rohröffnung 11 verteilt angeordnet. In die Einkerbungen 12 und in die Bohrungen 40 der Plattenschieber-Konstruktion 1 werden Schrauben eingelegt mit welchen die Plattenschieber-Konstruktion 1 zwischen zwei Rohrstücke (nicht gezeigt) geschraubt wird.

Die Plattenschieber-Konstruktion 1 eignet sich besonders für den Einsatz als Ventil in Rohren und an Kolbenpumpen, die pastöse Fluide 10 mit Fest-stoffgehalt transportieren. Beispielsweise werden in den Rohren Gülle, Silage, Zweige und Bioabfall mit Flüssigkeit transportiert.

Die Plattenschieber-Konstruktion 1 eignet sich besonders für Rohre mit einem Nenndurchmesser von 30-3000 mm und einem Nenndruck von bis zu 25 bar, insbesondere Nenndurchmesser von 50-1000 mm und Nenndrücke von 6-16 bar.

Figur 2 zeigt eine weitere perspektivische Darstellung der Plattenschieber-Konstruktion 1 aus Figur 1. In Figur 2 ist eine Gehäusehälfte nicht abgebildet, wodurch ein Innenleben der Plattenschieber-Konstruktion sichtbar wird. Bei der Plattenschieber-Konstruktion 1 sollen Richtungsangaben entlang einer Achse A definiert sein. Vorne ist in Richtung der Rohröffnung 11, hinten ist in Richtung des Deckelteils 3. Daraus definieren sich ein vorderer Gehäuseteil 23, der die Rohröffnung 11 beinhaltet und der hintere Gehäuseteil 9, der die Schieberplatte 25 in der Öffnungsstellung aufnimmt. In der Öffnungsstellung gibt die Schieberplatte 25 die Rohröffnung 11 im Wesentlichen frei und das Fluid 10 kann durch die Schieberplatten-Konstruktion fliessen.

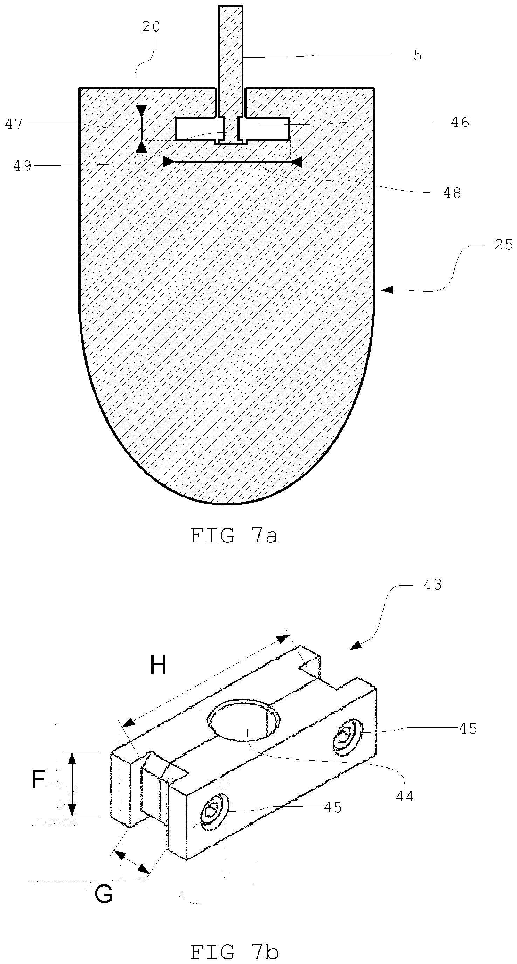

Die Schieberplatte 25 ist U-förmig ausgebildet, wobei eine vordere Kante 19 rund und eine hintere Kante 20 gerade ausgebildet sind. Gehäuseführungen 14 sind über als Schrauben 15 ausgebildete Verbindungsmittel mit dem Gehäuse 2 verbunden. Die Schieberplatte 25 wird durch die Gehäuseführungen 14 beim Bewegen geführt. Die Gehäuseführungen sind als Stahlleisten ausgebildet. Die Schieberplatte 25 ist über einen Formschluss 26 mit einer Kolbenstangenverlängerung 5 verbunden (siehe Figuren 7a und 7b).

Die vordere Kante 19 und die hintere Kante 20 sind keilförmig ausgebildet. Gegenüber den Kanten 19, 20 sind jeweils Gegenschneiden 17, 18 montiert, sodass die Kanten 19, 20 mit den Gegenschneiden 17, 18 Feststoffteile scherenartig zerteilen können. Die vordere Gegenschneide 18 ist an einem Dichtflansch 37 ausgebildet. Der Dichtflansch 37 dichtet den Anschluss zwischen Plattenschieber-Konstruktion 1 und dem Rohr gegen die Umgebung ab. Die hintere Gegenschneide 17 ist gerade ausgebildet und am Deckelteil 3 mit Schrauben fixiert.

Figur 3 zeigt eine weitere perspektivische Darstellung der Plattenschieber-Konstruktion 1 aus Figur 1. In Figur 3 befindet sich die Schieberplatte in einer Schliessstellung. Um von der Öffnungs- in die Schliessstellung zu wechseln, wird vom Hydraulikzylinderkolben 22 eine Hydraulikkolbenstange 21 angetrieben. Die Hydraulikkolbenstange 21 ist mit der Kolbenstangenverlängerung 5 über einen Formschluss 39 verbunden. Dabei werden Kolbenstangenverlängerung 5 und Hydraulikkolbenstange 21 axial ineinander verschraubt. Eine als Kolbenstangendichtung ausgebildete Deckelteildichtung 6 befindet sich an einer Deckelteilöffnung 4. Die Deckelteildichtung 6 führt die Kolbenstangenverlängerung 5 durch das Deckelteil 3.

Während des Schliessvorganges schneidet die vordere Kante 19 zusammen mit der Gegenschneide 18 allfällige Feststoffteile, welche sich nahe am Gehäuserand befinden. Dadurch erreicht die Schieberplatte 25 vollständig die Schliessstellung und schliesst den Rohrquerschnitt ab. In der Schliessstellung fliesst unbedeutend wenig Fluid durch die Rohröffnung 11 (siehe Fig. 1). Die Schieberplatte 25 kann auch jede Stellung zwischen Öffnungs- und Schliessstellung einnehmen. Während und nach dem Schliessvorgang kann das Fluid 10 zwischen den beiden Seiten der Schieberplatte 25 und dem Gehäuse 2 in den hinteren Gehäuseteil 9 fliessen. Um beim Öffnungsvorgang ebenfalls sicherzustellen, dass die Öffnungsstellung vollständig erreicht wird, ist auch die hintere Kante 20 keilförmig und somit scharf ausgebildet. Gemeinsam mit der Gegenschneide 17 werden allfällige Feststoffteile im hinteren Gehäuseteil 9 zerschnitten und die Schieberplatte 25 erreicht vollständig die Öffnungsstellung. Das Erreichen der Öffnungsstellung der Schieberplatte 25 wird durch einen berührungslosen Endlagenanzeiger überwacht.

Während des Erreichens der Öffnungsstellung werden allfällige Feststoffteile zerschnitten und somit zerkleinert. Dies erleichtert es dem Fluid 10, aus dem hinteren Gehäuseteil 9 in den vorderen Gehäuseteil 23 zu fließen. Beim Öffnungsvorgang wird das Fluid 10 von der Schieberplatte 25 zumindest teilweise wieder aus dem hinteren Gehäuseteil 9 in den vorderen Gehäuseteil 23 gedrückt. Der hintere Gehäuseteil 9 wird daher während des Schliessvorganges gefüllt und während des Öffnungsvorganges entleert.
Falls es zu Verstopfungen im Gehäuse 2 durch Feststoffteile kommt, wird das Gehäuse über die Reinigungsöffnungen 34 gereinigt. Die Verstopfungen sind Ansammlungen von Feststoffkörpern, die nicht aus dem hinteren Gehäuseteil 9 zurück in den vorderen Gehäuse-teil 23 fliessen. Die Ansammlungen können z.B. aufgrund ihrer Grösse oder Form nicht zwischen Schieberplatte 25 und Gehäuse 2 zurück in den vorderen Gehäuseteil 23 fliessen. Die Reinigungs-öffnungen 34 sind mit Verschlusszapfen 35 verschlossen.
Bei Verstopfungen wird der Verschlusszapfen 35 herausgeschraubt. Dann wird Druckgas oder Druckwasser an die Reinigungsöffnung 34 angeschlossen und die Feststoffteile in den vorderen Gehäuseteil 23 gespült. Bei hartnäckigen Verstopfungen wird eine Eisenstange oder ähnliches Werkzeug durch die Reinigungsöffnung eingeführt und die Ansammlung wird manuell zerkleinert und entfernt.

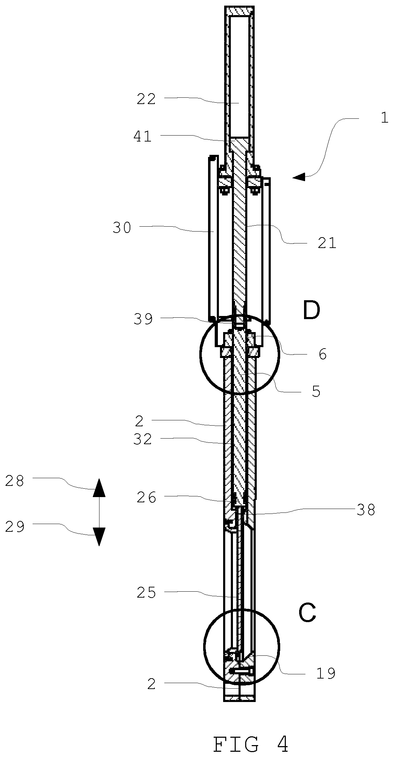

Figur 4 zeigt eine Schnittansicht entlang der Achse A aus Figur 2. Der Hydraulikzylinderkolben 22 bewegt die Hydraulikkolbenstange 21. Die Hydraulikkolbenstange 21 ist umgeben von der Handschutzabdeckung 30 und ist mit der Kolbenstangenverlängerung 5 am Formschluss 39 verbunden. Die Kolbenstangenverlängerung 5 führt durch die Deckelteildichtung 6 und die Deckelteilöffnung 4 zur Schieberplatte 25. Die Schieberplatte 25 ist über den Formschluss 26 mit der Kolbenstangenverlängerung 5 verbunden. Zwischen der Schieberplatte 25 und dem Gehäuse 2 ist ein Abstand 32 vorhanden. Der Abstand 32 ist an einem Übergang 29 vom hinteren zum vorderen Gehäuseteil 9, 23 am geringsten. Dort verstopft der Plattenschieber am wahrscheinlichsten. Die vordere Kante 19 der Schieberplatte 25 wird durch das Gehäuse 2 in der Schliessstellung gehalten.

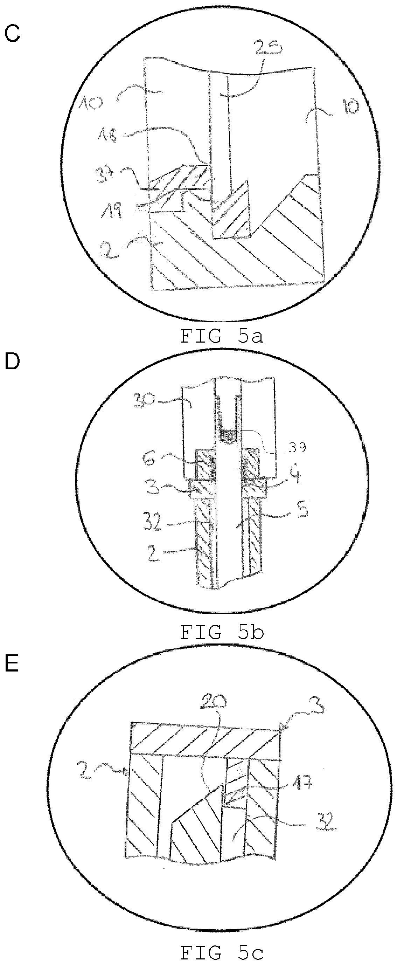

Figuren 5a und 5b zeigen die Details C und D aus Figur 4. Figur 5a bildet dabei die vordere Kante 19 der Schieberplatte 25 ab. Die Schieberplatte 25 befindet sich in der Figur 5a in der Schliessstellung. Zusammen mit der vorderen Gegenschneide 18 kann die Schieberplatte 25 Feststoffteile im Fluid 10 schneiden. Die Gegenschneide 18 ist einstückig mit dem Dichtflansch 37 ausgebildet. Bei der Schliessbewegung wird die Schieberplatte 25 zentriert durch eine Schräge Fläche.
Figur 5b zeigt die Deckelteildichtung 6 im Detail. Die Kolbenstangenverlängerung 5 führt aus dem Gehäuse 2 heraus. Dafür ist im Deckelteil 3 die Deckelteilöffnung 4 vorgesehen. An der Deckelteilöffnung 4 ist die Deckelteildichtung 6, die als Labyrinthdichtung ausgebildet ist, angebracht.
Figur 5c zeigt Detail E aus Figur 2. Der Schnitt zeigt die Schieberplatte 25 und einen Teil des Gehäuses 2 mit Deckelteil 3. Gegenüber der keilförmigen hinteren Kante 17 ist die Gegenschneide 17 angebracht. Dadurch werden Feststoffteile, die in den hinteren Gehäuseteil 9 gelangt sind, zerkleinert. In der Folge wird verhindert, dass der hintere Gehäuseteil von Feststoffteilen verstopft wird. Die Gegenschneide 17 ist am Gehäuse 2 mit als Schrauben ausgebildeten Verbindungsmitteln befestigt.

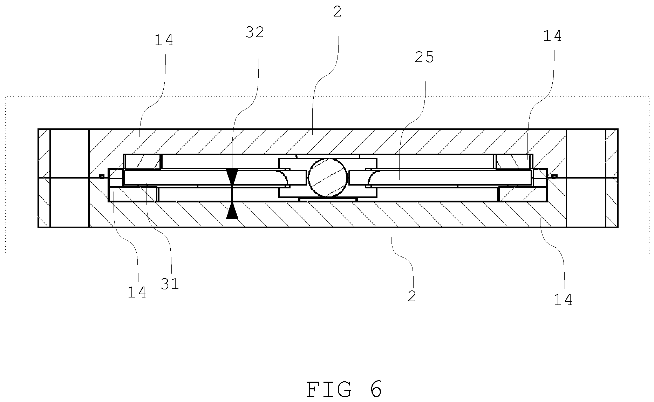

Figur 6 zeigt einen Schnitt entlang der Achse B aus Figur 2. Die Schieberplatte wird durch die Führungen 14 geführt. Da zwischen der Schieberplatte 25 und den Führungen ein Abstand 31 vorhanden ist und zwischen der Schieberplatte 25 und dem Gehäuse 2 ein Abstand 32 vorhanden ist, kann das Fluid 10 im Gehäuse 2 nach hinten fliessen. Der Abstand 32 beträgt insbesondere 1-30mm. Das Fluid 10 fliesst während des Schliessvorganges in den Raum, den die Schieberplatte 25 in der Öffnungsstellung einnimmt. Zusätzlich wird durch den Abstand 31 Reibung und Verschleiss der Schieberplatte und des Gehäuses bzw. den Führungen vermindert. Da sich die Schieberplatte 25 und die Führungen 14 in der Regel nicht berühren, verschleissen sie nicht. Das Fluid 10 in den Abständen 31,32 wirkt wie ein Gleitmittel für die Schieberplatte.

Die Figuren 7a und 7b zeigen eine Verbindung zwischen die Kolbenstangenverlängerung 5 mit der Schieberplatte 25. Figur 7a zeigt die U-förmige Schieberplatte 25 im Detail. An der hinteren Kante 20 ist eine T-förmige Ausnehmung 46 gezeigt. Die Ausnehmung 46 verfügt über eine Höhe 47 und eine Länge 48. Die Kolbenstangenverlängerung 5 wird für die Montage in die Ausnehmung 46 geführt. Die Verbindung wird mit einem Verbindungsteil 43 (siehe Figur 7b) hergestellt. In Figur 7b wird das Verbindungsteil gezeigt, wobei das Verbindungsteil zweiteilig ausgeführt ist. Von den beiden Seiten der Schieberplatte werden die Hälften des Verbindungsteiles 43 in die Ausnehmung 46 eingesetzt und umschliessen dabei eine Verjüngung 49 der Kolbenstangenverlängerung 5 mit einer Öffnung 44. Die Passung zwischen der Kolbenstangenverlängerung 5 und den Hälften des Verbindungsteils 43 hat ein Spiel. Durch dieses Spiel kann sich die Kolbenstange relativ zur Schieberplatte 25 leicht drehen und es werden keine Momente in Achsenrichtung vom Hydraulikzylinder 22 auf die Schieberplatte übertragen. Durch Schrauben 45 werden die Hälften des Verbindungsteiles 43 zusammengefügt. Dabei entsteht zwischen Kolbenstangenverlängerung 5 und Verbindungsteil 43, sowie zwischen Verbindungsteil 43 und Schieberplatte 25, eine formschlüssige Verbindung.

Eine Höhe F des Verbindungsteiles 43 ist geringer als eine Höhe 47 der Ausnehmung 46 und eine Länge H geringer als eine Länge 48. Zusätzlich ist eine Breite G der Verbindungsteile grösser als die Dicke der Schieberplatte 25. Dadurch ist die Schieberplatte 25 längs und quer zur Achse der Kolbenstangenverlängerung 5 räumlich verschiebbar gelagert. Dies hat den Vorteil, dass die Schieberplatte bei Öffnungs- und Schliessvorgängen eine gewisse Bewegung durchführen kann und sich nicht verkantet. Zusätzlich wird die Schieberplatte 25 beim Schliessvorgang zentriert aufgrund einer Keilwirkung auf die vordere Kante 19 (siehe Fig. 5a).

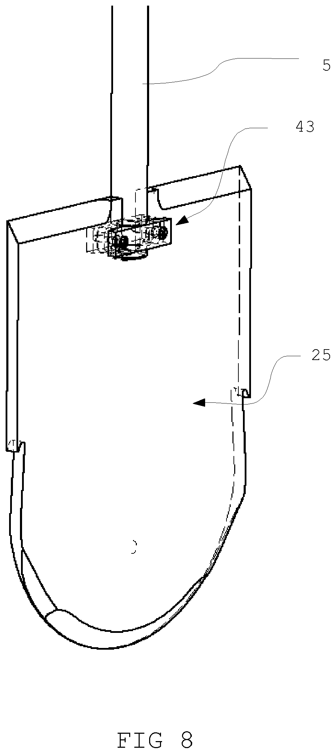

In Fig. 8 ist eine Detailansicht der Schieberplatte 25 mit Verbindungsteil 43 und Kolbenstange 5 im montierten Zustand gezeigt.

## Patentansprüche

1. Plattenschieber-Konstruktion (1), umfassend
- ein Gehäuse (2) mit einem Deckelteil (3) zum Verschliessen des Gehäuses (2),
- eine im Gehäuse (2) bewegbare Schieberplatte (25),
- eine durch eine Deckelteilöffnung (4) hindurch bewegbare Kolbenstange welche mit der Schieberplatte (25) verbunden oder verbindbar ist, wobei die Kolbenstange durch eine Deckelteildichtung(6) geführt wird, wobei die Schieberplatte (25) durch die Kolbenstange bewegbar ist und zumindest eine Öffnungs- sowie eine Schliessstellung einnehmen kann, wobei ein hinterer Gehäuseteil (9) die Schieberplatte (25)in der Öffnungsstellung aufnimmt,
**dadurch gekennzeichnet, dass**
in der Schliessstellung der hintere Gehäuseteil (9) von beiden Seiten der Schieberplatte (25) befüllbar ist.

2. Plattenschieber-Konstruktion (1) nach Anspruch 1, **dadurch gekennzeichnet, dass** wenigstens eine verschliessbare Reinigungsöffnung (34) im Gehäuse, vorzugsweise im Deckelteil, zum Spülen oder Reinigen des hinteren Gehäuseteils (9) ausgebildet ist.

3. Plattenschieber-Konstruktion (1) nach Anspruch 2, **dadurch gekennzeichnet, dass** die verschliessbare/n Reinigungsöffnung/en (34) derart gestaltet ist/sind, dass mechanische Reinigungsmittel oder Reinigungsmedien eingeführt werden können.

4. Plattenschieber-Konstruktion (1) einem der Ansprüche 1 bis 3, **dadurch gekennzeichnet, dass** mindestens eine Führung Z (14) für die Schieberplatte (25) lösbar mit Seitenwänden des hinteren Gehäuseteils (9) verbunden ist.

5. Plattenschieber-Konstruktion (1) nach einem der Ansprüche 1 bis 4, **dadurch gekennzeichnet, dass** die Schieberplatte (25) zu den Seitenwänden und/oder den Führungen (14) beabstandet angeordnet ist.

6. Plattenschieber-Konstruktion (1) einem der Ansprüche 1 bis 5, **dadurch gekennzeichnet, dass** eine vordere und/oder eine hintere Kante (19, 20) der Schieberplatte (25) keilförmig zulaufen.

7. Plattenschieber-Konstruktion (1) nach Anspruch 6, **dadurch gekennzeichnet, dass** eine Gegenschneide (18, 17) für die vordere Kante (19) und/oder die hintere Kante (20) der Schieberplatte (25) im Gehäuse (2) angeordnet ist.

8. Plattenschieber-Konstruktion (1) nach einem der Ansprüche 1 bis 7, **dadurch gekennzeichnet, dass** die Kolbenstange eine Hydraulikkolbenstange (21) beinhaltet.

9. Plattenschieber-Konstruktion (1) nach Anspruch 8, **dadurch gekennzeichnet, dass** die Deckelteildichtung (6) eine Hydraulikdichtung ist.

10. Plattenschieber-Konstruktion (1) nach einem der Ansprüche 1 bis 9, **dadurch gekennzeichnet, dass** die Deckelteildichtung (6) eine Hydraulikdichtung, insbesondere eine Labyrinthdichtung, oder eine Pneumatikdichtung oder eine Stopfbuchsendichtung ist.

11. Plattenschieber-Konstruktion (1) nach einem der Ansprüche 1 bis 10, **dadurch gekennzeichnet, dass** die Schieberplatte (25) aus Stahl gefertigt ist.

12. Verfahren zum Abschliessen eines Rohres mittels einer Plattenschieber-Konstruktion, vorzugsweise nach Anspruch 1, wobei die Plattenschieber-Konstruktion (1)ein Gehäuse (2) mit einem Deckelteil (3) zum Verschliessen des Gehäuses (2), eine in dem Gehäuse (2) bewegbare Schieberplatte (25) und eine Kolbenstange aufweist, die durch eine Deckelteilöffnung (4) mit einer Deckelteildichtung (6) führt, welche mit der Schieberplatte (25) verbunden oder verbindbar ist,
- wobei die Schieberplatte (25) in der Öffnungsstellung von einem hinterem Gehäuseteil (9) aufgenommen wird,
- wobei die Schieberplatte (25) von der Kolbenstange aus der Öffnungsstellung in eine Schliessstellung bewegt wird,
**dadurch gekennzeichnet, dass**
in der Schliessstellung von den Seiten der Schieberplatte (25) ein Fluid (10) jeweils ein- oder ausströmt.

13. Verfahren zum Abschliessen eines Rohres nach Anspruch 12, **dadurch gekennzeichnet, dass** die Schieberplatte (25) durch eine Hydraulikkolbenstange (21) bewegt wird.

14. Verfahren zum Abschliessen eines Rohres nach Anspruch 13, **dadurch gekennzeichnet, dass** die Deckelteildichtung (6) eine Dichtung eines Hydraulikzylinderkolbens (22) ist.

15. Verfahren zum Abschliessen eines Rohres nach einem der Ansprüche 12 bis 14, **dadurch gekennzeichnet, dass** die Schieberplatte (25) 1-30 Schliess- und Öffnungsvorgänge pro Stunde durchführt.

16. Verwendung einer Plattenschieber-Konstruktion (1) nach einem der Ansprüche 1 bis 11 zum Abschliessen eines Rohres, das pastöse Flüssigkeiten mit Feststoffteilen, insbesondere biologische Flüssigkeiten und Feststoffteile, transportiert.

## Claims

1. A parallel slide gate valve construction (1), comprising
- a housing (2) with a cover part (3) for closing the housing (2),
- a slide plate (25) that can be moved in the housing (2),
- a piston rod that can be moved through a cover part opening (4) and which is connected or connectable to the slide plate (25), wherein the piston rod is guided through a cover part seal (6), wherein the slide plate (25) can be moved by the piston rod and can assume at least one open and one closed position, wherein a rear housing part (9) receives the slide plate (25) in the open position,
**characterised in that**
the rear housing part (9) can be filled from both sides of the slide plate (25) in the closed position.

2. The parallel slide gate valve construction (1) according to claim 1, **characterised in that** at least one closable cleaning opening (34) is formed in the housing, preferably in the cover part, for flushing or cleaning the rear housing part (9).

3. The parallel slide gate valve construction (1) according to claim 2, **characterised in that** the closable cleaning opening(s) (34) is/are formed in such a way that mechanical cleaning agents or cleaning media can be introduced.

4. The parallel slide gate valve construction (1) according to any one of claims 1 to 3, **characterised in that** at least one guide (14) for the slide plate (25) is connected releasably to side walls of the rear housing part (9).

5. The parallel slide gate valve construction (1) according to any one of claims 1 to 4, **characterised in that** the slide plate (25) is arranged at a distance from the side walls and/or the guides (14).

6. The parallel slide gate valve construction (1) according to any one of claims 1 to 5, **characterised in that** a front and/or a rear edge (19, 20) of the slide plate (25) are wedge-shaped.

7. The parallel slide gate valve construction (1) according to claim 6, **characterised in that** a counter blade (18, 17) for the front edge (19) and/or the rear edge (20) of the slide plate (25) is arranged in the housing (2).

8. The parallel slide gate valve construction (1) according to any one of claims 1 to 7, **characterised in that** the piston rod includes a hydraulic piston rod (21).

9. The parallel slide gate valve construction (1) according to claim 8, **characterised in that** the cover part seal (6) is a hydraulic seal.

10. The parallel slide gate valve construction (1) according to any one of claims 1 to 9, **characterised in that** the cover part seal (6) is a hydraulic seal, in particular a labyrinth seal, or a pneumatic seal or a gland seal.

11. The parallel slide gate valve construction (1) according to any one of claims 1 to 10, **characterised in that** the slide plate (25) is made of steel.

12. A method for closing off a pipe by means of a parallel slide gate valve construction, preferably according to claim 1, wherein the parallel slide gate valve construction (1) has a housing (2) with a cover part (3) for closing the housing (2), a slide plate (25) movable in the housing (2), and a piston rod, which leads through a cover part opening (4) with a cover part seal (6), which is connected or can be connected to the slide plate (25),
- wherein the slide plate (25) is received in the open position by a rear housing part (9),
- wherein the slide plate (25) is moved by the piston rod from the open position into a closed position,
**characterised in that**
a fluid (10) flows in or out from the sides of the slide plate (25) in the closed position.

13. The method for closing off a pipe according to claim 12, **characterised in that** the slide plate (25) is moved by a hydraulic piston rod (21).

14. The method for closing off a pipe according to claim 13, **characterised in that** the cover part seal (6) is a seal of a hydraulic cylinder piston (22).

15. The method for closing off a pipe according to any one of claims 12 to 14, **characterised in that** the slide plate (25) performs 1-30 closing and opening procedures per hour.

16. Use of a parallel slide gate valve construction (1) according to any one of claims 1 to 11 for closing off a pipe which transports pasty liquids containing solid matter, in particular biological liquids and solid matter.

## Revendications

1. Construction de robinet-vanne (1) comprenant
- un boîtier (2) doté d'une partie couvercle (3) pour la fermeture du boîtier (2),
- un robinet-vanne (25) mobile dans le boîtier (2),
- une tige de piston mobile à travers un orifice de couvercle (4), laquelle est reliée, ou peut être reliée, avec le robinet-vanne (25), où la tige de piston est menée à travers un joint de la partie couvercle (6), où le robinet-vanne (25) est mobile à travers la tige de piston et peut adopter au moins une position d'ouverture ainsi qu'une position de fermeture, où une partie de boîtier arrière (9) reçoit le robinet-vanne (25) dans la position d'ouverture,
**caractérisée en ce que**
dans la position de fermeture, la partie de boîtier arrière (9) peut être remplie à partir de deux côtés du robinet-vanne (25).

2. Construction de robinet-vanne (1) selon la revendication 1, **caractérisée en ce qu'**au moins un orifice de nettoyage (34) pouvant être fermé est prévu dans le boîtier, de préférence, dans la partie couvercle, pour le lavage ou le nettoyage de la partie de boîtier arrière (9) .

3. Construction de robinet-vanne (1) selon la revendication 2, **caractérisée en ce que** l'orifice/les orifices de nettoyage (34) pouvant être fermé/s est/sont conçu/s de telle manière que des produits de nettoyage mécaniques ou des milieux de nettoyage peuvent être introduits.

4. Construction de robinet-vanne (1) selon l'une des revendications 1 à 3, **caractérisée en ce qu'**au moins un système de guidage (14) pour le robinet-vanne (25) est relié de manière amovible avec des parois latérales de la partie de boîtier arrière (9)

5. Construction de robinet-vanne (1) selon l'une des revendications 1 à 4, **caractérisée en ce que** le robinet-vanne (25) est disposé espacé par rapport aux parois latérales et/ou aux systèmes de guidage (14).

6. Construction de robinet-vanne (1) selon l'une des revendications 1 à 5, **caractérisée en ce qu'**une arête avant et/ou une arête arrière (19, 20) du robinet-vanne (25) se rejoignent en forme de cône.

7. Construction de robinet-vanne (1) selon la revendication 6, **caractérisée en ce qu'**une contre-lame (18, 17) pour l'arête avant (19) et/ou l'arête arrière (20) du robinet-vanne (25) est disposée dans le boitier (2) .

8. Construction de robinet-vanne (1) selon l'une des revendications 1 à 7, **caractérisée en ce que** la tige de piston contient une tige de piston hydraulique (21).

9. Construction de robinet-vanne (1) selon la revendication 8, **caractérisée en ce que** le joint de la partie couvercle (6) est un joint hydraulique.

10. Construction de robinet-vanne (1) selon l'une des revendications 1 à 9, **caractérisée en ce que** le joint de la partie couvercle (6) est un joint hydraulique, notamment, un joint labyrinthe, ou un joint pneumatique ou un presse-étoupe.

11. Construction de robinet-vanne (1) selon l'une des revendications 1 à 10, **caractérisée en ce que** le robinet-vanne (25) est fabriqué en acier.

12. Procédé d'obturation d'un tuyau au moyen d'une construction de robinet-vanne, de préférence selon la revendication 1, où la construction de robinet-vanne (1) comprend un boîtier (2) avec une partie couvercle (3) pour la fermeture du boîtier (2), un robinet-vanne (25) mobile dans le boîtier (2), et une tige de piston qui mène à travers un orifice de partie couvercle (4) avec un joint d'étanchéité de la partie couvercle (6), laquelle est relié, ou peut être relié avec le robinet-vanne (25),
- où le robinet-vanne (25) est reçu par une partie de boîtier arrière (9) dans la position d'ouverture,
- où le robinet-vanne (25) est déplacé par la tige de piston de la position d'ouverture vers une position de fermeture,
**caractérisé en ce que,**
dans la position de fermeture, un fluide (10) entre ou s'échappe respectivement des côtés du robinet-vanne (25).

13. Procédé d'obturation d'un tuyau selon la revendication 12, **caractérisé en ce que** le robinet-vanne (25) est déplacé par une tige de piston hydraulique (21).

14. Procédé d'obturation d'un tuyau selon la revendication 13, **caractérisé en ce que** le joint de la partie couvercle (6) est un joint d'un piston de cylindre hydraulique (22).

15. Procédé d'obturation d'un tuyau selon l'une des revendications 12 à 14, **caractérisé en ce que** le robinet-vanne (25) effectue de 1 à 30 cycles de fermeture et d'ouverture par heure.

16. Utilisation d'une construction de robinet-vanne (1) selon l'une des revendications 1 à 11 pour l'obturation d'un tuyau qui transporte des liquides pâteux avec des particules solides, notamment des liquides et des particules solides biologiques.
